# EUROPÄISCHE PATENTSCHRIFT

(11) **EP 2 891 572 B1**
(45) Veröffentlichungstag und Bekanntmachung des Hinweises auf die Patenterteilung: **24.10.2018**
(21) Anmeldenummer: 14196781.0
(22) Anmeldetag: 08.12.2014
(51) Int. Cl.: B60K 35/00, B60K 37/06, A61B 5/117, G06K 9/00, G07C 11/00, H04N 21/414, H04N 21/436

(54) **Verfahren und Vorrichtung zum Ausgeben einer Information in einem Fahrzeug**
Method and device for providing information in a vehicle
Procédé et dispositif d'émission d'une information dans un véhicule

(30) Priorität: 06.01.2014 DE 102014200025
(43) Veröffentlichungstag der Anmeldung: 08.07.2015
(73) Patentinhaber: Volkswagen Aktiengesellschaft, 38440 Wolfsburg (DE)
(72) Erfinder: Defoort, Simon, 38114 Braunschweig (DE)

(56) Entgegenhaltungen:
- US-A1- 2011 169 755
- US-A1- 2013 030 645
- US-B1- 8 587 546

## Beschreibung

Die vorliegende Erfindung betrifft ein Verfahren und eine Vorrichtung zum Ausgeben zumindest einer ersten Information in einem Fahrzeug.
In der Regel weist ein Fahrzeug zumindest eine Anzeigefläche in der Mittelkonsole des Fahrzeugs auf. Auf dieser Anzeigefläche können Einstellungen zu Fahrzeugfunktionen, Navigationsinformationen oder - bei stehenden Fahrzeugen - sogar Filme und Fernsehprogramme ausgegeben werden. Dabei ist diese Anzeigefläche derart angeordnet, dass sie zumindest vom Fahrer und vom Beifahrer einsehbar ist, ohne dass diese unbequeme Sitzpositionen einnehmen müssen. Werden Informationen, wie beispielsweise E-Mail-Nachrichten, Kurzmitteilungen oder ähnliches erhalten, können diese ebenfalls auf dieser Anzeigefläche angezeigt werden. Dies kann jedoch aus unterschiedlichen Gründen nicht erwünscht sein. Beispielsweise muss dann die gerade angezeigte Information zumindest zum Teil ausgeblendet werden. Es kann sich bei den empfangenen Informationen aber auch um vertrauliche Informationen handeln, die andere Fahrzeuginsassen nicht sehen sollen.

Die US 8 587 546 A1 beschreibt ein Verfahren und eine Vorrichtung zum Ausgeben einer Information in einem Fahrzeug mit den Merkmalen des Oberbegriffs der Ansprüche 1 und 9.

Die US 2013/0030645 A1 beschäftigt sich mit der Zuordnung vertraulicher Nachrichten in einem Fahrzeug.

Die DE 10 2009 009 694 A1 beschreibt eine Fahrzeug-Freisprecheinrichtung mittels der mehrere Mobiltelefone mit dem Fahrzeug koppelbar sind. Dabei können auf den beiden Mobiltelefonen gleichzeitig eingehende Telefonanrufe unterscheidbar auf einer Anzeigeeinheit angezeigt werden.
Die DE 103 36 814 A1 beschreibt ein elektronisches Gerät mit einer Nutzererkennung. Abhängig von der Identität des Nutzers können Funktionen und eine Funktionsauswahl bereitgestellt werden.
Der vorliegenden Erfindung liegt die Aufgabe zugrunde, ein Verfahren und eine Vorrichtung bereitzustellen, mittels denen eine etwaige Vertraulichkeit von empfangenen Informationen gewahrt werden kann.
Diese Aufgabe wird durch ein Verfahren nach Anspruch 1 und eine Vorrichtung nach Anspruch 9 gelöst. Vorteilhafte Ausgestaltungen und Weiterbildungen sind Gegenstände der abhängigen Ansprüche.
Bei dem erfindungsgemäßen Verfahren ist einem ersten Bedienelement eine erste und eine zweite Bedienaktion zugeordnet ist. Weiterhin wird über eine erste Empfangseinheit die erste Information empfangen und der Empfang der ersten Information wird signalisiert. Wenn die erste Bedienaktion erfasst wurde, wird die empfangene erste Information von einer ersten Ausgabeeinheit ausgegeben, wobei die erste Ausgabeeinheit mehreren Fahrzeugsitzen zugeordnet ist. Wenn die zweite Bedienaktion erfasst wurde, wird die empfangene erste Information von einer zweiten Ausgabeeinheit ausgegeben, wobei die zweite Ausgabeeinheit nur einem Fahrzeugsitz zugeordnet ist. Die Bedienaktionen ermöglichen vorteilhafterweise, dass beispielsweise der Fahrer, dessen Aufmerksamkeit hauptsächlich dem Straßengeschehen gelten soll, schnell und einfach entscheiden kann, wo er empfangene Informationen ausgegeben haben möchte.

Dabei müssen die erste und zweite Ausgabeeinheit nicht räumlich getrennt voneinander angeordnet sein. Beispielsweise kann die erste und zweite Ausgabeeinheit in einem Dual-View-Display vereint sein, wobei eine erste Ansicht aus einem bestimmten Betrachtungswinkel, beispielsweise vom Fahrersitz aus, die erste Ausgabeeinheit und eine zweite Ansicht aus einem anderen Betrachtungswinkel, beispielsweise vom Fahrer- und Beifahrersitz aus, die zweite Ausgabeeinheit sind.

Bei den Informationen kann es sich beispielsweise um Navigationsinformationen, Informationen zum Wetter oder der Umgebung oder aber auch um empfangen Kurznachrichten, E-Mails oder über soziale Netzwerke empfangene Nachrichten handeln, deren Inhalt gegebenenfalls vertraulich ist. Die Empfangseinheit kann dabei entweder fest im Fahrzeug verbaut sein, beispielsweise eine Navigationsgerät, oder ein mobiles Gerät sein, beispielsweise ein Tablet-Computer oder ein Mobiltelefon.

Die erste Ausgabeeinheit ist "mehreren Fahrzeugsitzen zugeordnet". Darunter wird insbesondere verstanden, dass die erste Ausgabeeinheit von zumindest zwei Fahrzeugsitzen des Fahrzeugs aus einsehbar ist. Diese ist bevorzugt in der Mittelkonsole des Fahrzeugs angeordnet. Dadurch können zumindest Fahrer und Beifahrer durch bloßes Verändern der Blickrichtung die erste Ausgabeeinheit einsehen. Die zweite Ausgabeeinheit ist "nur einem Fahrzeugsitz zugeordnet". Darunter wird verstanden, dass die zweite Ausgabeeinheit lediglich von der Person, die auf dem Fahrzeugsitz sitzt, dem die zweite Ausgabeeinheit zugeordnet ist, einsehbar ist. Ist die zweite Ausgabeeinheit dem Fahrersitz zugeordnet, kann diese beispielsweise auf der rechten Seite im Kombiinstrument des Fahrzeugs angeordnet werden. Dadurch wird die zweite Ausgabeeinheit dann von der Abdeckung des Kombiinstruments für den Beifahrer verdeckt. Wenn der Beifahrer die zweite Ausgabeeinheit dann einsehen wollen würde, müsste er seine Sitzposition derart verändern, dass dies vom Fahrer nicht unbemerkt bliebe. Ist die zweite Ausgabeeinheit dem Beifahrersitz zugeordnet, kann diese beispielsweise vor dem Beifahrersitz im Armaturenbrett angeordnet sein. Dabei kann die zweite Ausgabeeinheit von Abdeckungen abgedeckt sein, so dass der Fahrer diese nicht einsehen kann. Alternativ kann die zweite Ausgabeeinheit als Dual-View-Display ausgestaltet sein. Vom Blickwinkel des einen Fahrzeuginsassen aus betrachtet würde dann ein schwarzes Feld sichtbar sein, während vom Blickwinkel des anderen Fahrzeuginsassen aus eine normale Anzeige mit Informationen sichtbar ist.
In einer Ausgestaltung des erfindungsgemäßen Verfahrens wird das erste Bedienelement auf einer Eingabevorrichtung mit einer Anzeigefläche angezeigt. Das erste Bedienelement ist dabei am Rand der Anzeigefläche angeordnet. Weiterhin sind die Bedienaktionen Wischgesten, wobei die erste Bedienaktion eine Wischgeste ist, die ausgehend von dem ersten Bedienelement zur erste Ausgabeeinheit hin ausgeführt wird, und die zweite Bedienaktion eine Wischgeste ist, die ausgehend von dem ersten Bedienelement seitlich von der ersten Ausgabeeinheit weg zu der zweiten Ausgabeeinheit hin ausgeführt wird. Die Wischgesten als Bedienaktionen sind für den Fahrer besonders einfach auszuführen. Zudem ist die Ausgestaltung der Wischgesten besonders intuitiv. Der Nutzer verwendet die Metapher, dass er die Information von dem Bedienelement in die Ausgabeeinheit wischt, in der sie ausgegeben werden soll.
Insbesondere ist dem ersten Bedienelement eine dritte Bedienaktion zugeordnet, wobei, wenn die dritte Bedienaktion ausgeführt wurde, die empfangene Information nicht ausgegeben wird. Dadurch kann dann der Nutzer vorteilhafterweise auch entscheiden, die Nachricht auf keiner Ausgabeeinheit auszugeben, und sie stattdessen später ungestört auszugeben. Bevorzugt ist die dritte Bedienaktion eine Bedienaktion, die ausgehend von dem ersten Bedienelement nach unten ausgeführt wird. Dadurch kann dann eine Verwechslung der drei Bedienaktionen vermieden werden.

Erfindungsgemäß wird der ersten Information ein Vertraulichkeitsgrad zugeordnet und der Vertraulichkeitsgrad wird ausgegeben. Dies kann insbesondere über die Signalisierung, die signalisiert, dass eine Information empfangen wurde, geschehen. Ist die Signalisierung akustisch, so können je nach Vertraulichkeitsgrad unterschiedliche Tonhöhen ausgegeben werden. Ist die Signalisierung visuell, kann der Vertraulichkeitsgrad über unterschiedliche Farben signalisiert werden. Bei Informationen mit Vertraulichkeitsgrad handelt es sich insbesondere um Kurzmitteilungen (SMS), E-Mails und/oder Nachrichten, die über soziale Netzwerke empfangen wurden. Vorteilhafterweise erleichtert die Ausgabe des Vertraulichkeitsgrades dem Fahrer die Entscheidung, ob die erste Information an der ersten oder der zweiten Ausgabeeinheit ausgegeben werden soll.
In einer weiteren Ausgestaltung wird die erste Empfangseinheit einem ersten Nutzer zugeordnet. Die erste Information wird nur dann ausgegeben, wenn ermittelt wurde, dass der erste Nutzer die erste oder zweite Bedienaktion tätigt. Dadurch kann vermieden werden, dass ein anderer Nutzer, als der, dem die Empfangseinheit zugeordnet ist, Zugriff auf die erste Information erhalten kann. Wer gegebenenfalls die dritte Bedienaktion tätigt ist unerheblich. Denn nach Ausführung der dritten Bedienaktion wird die Information nicht ausgegeben.

Insbesondere wird über eine zweite Empfangseinheit eine zweite Information empfangen, wobei die zweite Empfangseinheit einem zweiten Nutzer zugeordnet wird. Einem zweiten Bedienelement werden die erste, die zweite und/oder die dritte Bedienaktion zugeordnet. Weiterhin wird die zweite Information nur dann ausgegeben, wenn ermittelt wurde, dass der zweite Nutzer die erste oder zweite Bedienaktion tätigt. Vorteilhafterweise können dann mehrere Fahrzeuginsassen gleichzeitig über unterschiedliche Empfangseinheiten empfangene Informationen an unterschiedlichen Ausgabeeinheiten ausgeben lassen. Der Beifahrersitz weist in der Regel keine separate ihm zugeordnete Ausgabeeinheit auf. Eine Zuordnung der zweiten Bedienaktion zu dem zweiten Bedienelement ist daher nur sinnvoll, wenn der Beifahrersitz eine ihm zugeordnete Ausgabeeinheit aufweist. Diese kann dann beispielweise im Armaturenbrett auf der Beifahrerseite angeordnet sein.

Da in der Regel lediglich dem Fahrersitz eine zusätzliche Ausgabeeinheit zugeordnet ist, dem Beifahrersitz aber nicht, wird dem zweiten Bedienelement bevorzugt nur die erste und dritte Bedienaktion zugeordnet. Ist dem Beifahrersitz eine eigene Ausgabeeinheit zugeordnet, kann dem zweiten Bedienelement zusätzlich die zweite Bedienaktion zugeordnet sein.

Insbesondere ist/sind die erste und/oder die zweite Empfangseinheit ein mobiles Gerät, welches/welche mit dem Fahrzeug gekoppelt werden. Vorteilhafterweise können dann mehrere Fahrzeuginsassen ihre mobilen Geräte, insbesondere Mobiltelefone, mit dem Fahrzeug koppeln und eingehende Nachrichten über das Fahrzeug ausgeben. Zudem wird erschwert, dass ein Fahrzeuginsasse vertrauliche Informationen des jeweils anderen lesen kann. Auch der zweiten Information kann wie der ersten Information ein Vertraulichkeitsgrad zugeordnet werden.

Die Erfindung betrifft weiterhin eine Vorrichtung zum Ausgeben zumindest einer Information in einem Fahrzeug. Die Vorrichtung umfasst eine ersten Empfangseinheit, über die eine erste Information empfangbar ist. Weiterhin umfasst die Vorrichtung eine Signalvorrichtung, mittels welcher der Empfang der Information signalisierbar ist. Zudem umfasst die Vorrichtung ein erstes Bedienelement, welchem eine erste und eine zweite Bedienaktion zugeordnet sind, und eine Eingabevorrichtung, auf welcher die erste und die zweite Bedienaktion eingebbar sind. Außerdem weist die Vorrichtung eine Steuervorrichtung auf, mittels welcher eine erste Ausgabeeinheit derart ansteuerbar ist, dass die erste Information von der ersten Ausgabeeinheit ausgebbar ist, wenn die erste Bedienaktion erfasst wurde, wobei die erste Ausgabeeinheit mehreren Fahrzeugsitzen zugeordnet ist, und mittels welcher eine zweite Ausgabeeinheit derart ansteuerbar ist, dass die erste Information von der zweiten Ausgabeeinheit ausgebbar ist, wenn die zweite Bedienaktion erfasst wurde, wobei die zweite Ausgabeeinheit nur einem Fahrzeugsitz zugeordnet ist. Die erfindungsgemäße Vorrichtung dient insbesondere dem Ausführen des erfindungsgemäßen Verfahrens und weist daher alle Vorteile des erfindungsgemäßen Verfahrens auf.

Insbesondere ist die erste Empfangseinheit ein mobiles Gerät, welches über eine Schnittstelle mit der Vorrichtung koppelbar ist. Bevorzugt ist das mobile Gerät ein Mobiltelefon. Der Nutzer kann dann vorteilhafterweise Informationen, die er über sein Mobiltelefon empfängt im Fahrzeug über fahrzeuginterne Ausgabeeinheiten ausgeben lassen. Dies trägt zur Sicherheit des Fahrzeugführens bei, da dann insbesondere der Fahrer nicht mehr versucht ist, Informationen von seinem Mobiltelefon während dem Fahren ausgeben zu lassen.

In einer Ausgestaltung der erfindungsgemäßen Vorrichtung umfasst die erste Ausgabeeinheit eine Anzeigevorrichtung in der Mittelkonsole des Fahrzeugs und die zweite Ausgabeeinheit eine Anzeigevorrichtung im Kombiinstrument des Fahrzeugs. Durch die Anordnung der zweiten Anzeigevorrichtung im Kombiinstrument muss der Fahrer zum Lesen einer empfangenen Information die Augen nur leicht senken. Das Drehen des Kopfes kann entfallen. Zudem müsste ein anderer Fahrzeuginsasse, insbesondere der Beifahrer, zum Einsehen der zweiten Anzeigevorrichtung sein Sitzposition verändern. Dies würde dem Fahrer jedoch auffallen, so dass dieser bei einer hohen Vertraulichkeit der Information diese schnell von der Anzeige löschen könnte.

In einer weiteren Ausgestaltung umfasst die erste Ausgabeeinheit ein Lautsprechersystem für eine Sprachausgabe, bei dem die Lautsprecher im Innenraum des Fahrzeugs verteilt angeordnet sind, und die zweite Ausgabeeinheit ein Lautsprechersystem für eine Sprachausgabe in der Kopfstütze des entsprechenden Fahrzeugsitzes umfasst.

Bevorzugt umfasst die Vorrichtung eine Identifikationsvorrichtung, mittels welcher ermittelbar ist, welcher Nutzer die Bedienaktionen tätigt. Dadurch kann gewährleistet werden, dass sich nur der befugte Nutzer die Information ausgeben lassen kann.

Die Erfindung betrifft ferner ein Fahrzeug mit einer erfindungsgemäßen Vorrichtung.

Im Folgenden wird die Erfindung anhand von Ausführungsbeispielen mit Bezug zu den Zeichnungen erläutert.
- Figur 1: zeigt ein Ausführungsbeispiel der erfindungsgemäßen Vorrichtung,
- Figur 2: zeigt die Anordnung des Ausführungsbeispiels der erfindungsgemäßen Vorrichtung in einem Fahrzeug,
- Figur 3a bis 3d: zeigen ein erstes Ausführungsbeispiel des erfindungsgemäßen Verfahrens, und
- Figur 4a bis 4c: zeigen ein zweites Ausführungsbeispiel des erfindungsgemäßen Verfahrens.

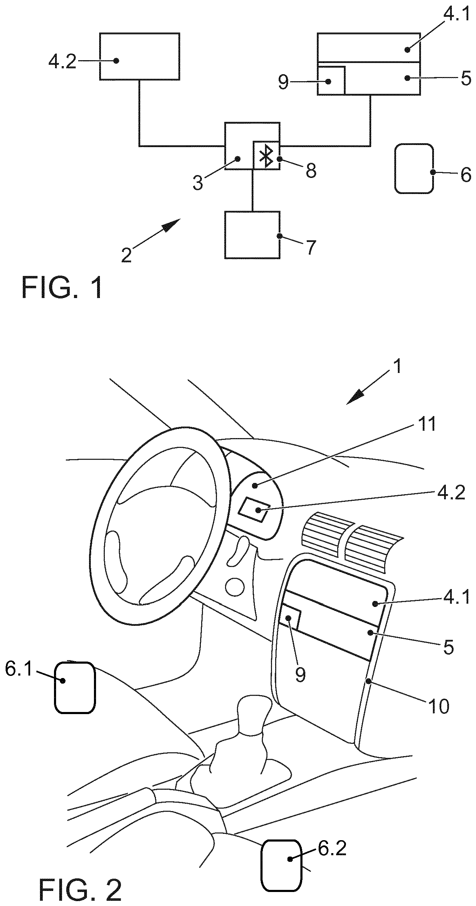

Mit Bezug zu den Figur 1 und 2 wird ein Ausführungsbeispiel einer erfindungsgemäßen Vorrichtung 2 sowie eine Anordnung der erfindungsgemäßen Vorrichtung 2 in einem Fahrzeug 1 erläutert.

Die Vorrichtung 2 weist zwei Ausgabeeinheiten 4.1 und 4.2 auf. Die Ausgabeeinheiten 4.1 und 4.2 sind dabei beispielsweise Anzeigevorrichtungen. Weiterhin umfasst die Vorrichtung 2 eine Steuervorrichtung 3, mittels derer die Anzeigevorrichtungen 4.1 und 4.2 ansteuerbar sind. Dies wird später näher erläutert. In der Steuervorrichtung 3 ist eine Schnittstelle 8 integriert. Im vorliegenden Beispiel handelt es sich bei der Schnittstelle 8 um eine Bluetooth-Schnittstelle, über die eine erste Empfangseinheit 6, im vorliegenden Beispiel das Mobiltelefon 6.1 des Fahrers, mit der Vorrichtung 2 gekoppelt ist.

Die erste Anzeigevorrichtung 4.1 ist in der Mittelkonsole 10 des Fahrzeugs 1 angeordnet. Diese ist mehreren Fahrzeugsitzen, insbesondere zumindest dem Fahrer- und Beifahrersitz, zugeordnet. Dies bedeutet vor allem, dass die erste Anzeigevorrichtung 4.1 von mehreren Fahrzeugsitzen aus einsehbar ist, ohne dass unangenehme Sitzpositionen von den auf den Fahrzeugsitzen sitzenden Personen eingenommen werden müssen. Die zweite Anzeigevorrichtung 4.2 ist im Kombiinstrument 11 des Fahrzeugs 1 angeordnet. Die zweite Anzeigevorrichtung 4.2 ist somit nur dem Fahrersitz zugeordnet. Die zweite Anzeigevorrichtung 4.2 ist dabei derart im Kombiinstrument 11 angeordnet, dass sie von keinem anderen Fahrzeugsitz des Fahrzeugs 1 aus einsehbar ist, wenn die auf den Fahrzeugsitzen sitzenden Personen aufrechte Sitzpositionen einnehmen. Dies kann dadurch erreicht werden, dass die zweite Anzeigevorrichtung 4.2 außen rechts im Kombiinstrument 11 angeordnet wird. Dadurch wird sie von der Abdeckung des Kombiinstrument 11 verdeckt. Alternativ ist die Anzeigefläche der zweiten Anzeigevorrichtung 4.2 als Dual-View-Display ausgestaltet. Dadurch ist sie vom Blickwinkel des Fahrers aus als normale Anzeigefläche sichtbar, vom Blickwinkel des Beifahrers und jedoch als schwarze Fläche sichtbar. Dann kann die zweite Anzeigevorrichtung 4.2 auch in der Mitte des Kombiinstruments 11 angeordnet sein.

Weiterhin umfasst die erfindungsgemäße Vorrichtung 2 eine Eingabevorrichtung 5. Die Eingabevorrichtung 5 ist als berührungsempfindliche Oberfläche auf der ersten Anzeigevorrichtung 4.1 ausgebildet. Zudem ist auf der ersten Anzeigevorrichtung 4.1 ein Bedienelement 9 am Rand der Anzeigefläche angeordnet, welches durch Berührungen betätigt werden kann. Die erste Anzeigevorrichtung 4.1 dient gleichzeitig als Signalvorrichtung. Das Bedienelement 9 kann so angesteuert werden, dass es beim Empfangen einer Nachricht anders dargestellt wird. Alternativ kann die Signalvorrichtung auch durch Lautsprecher bereitgestellt werden. Dabei wird bei Empfang einer Nachricht ein akustisches Signal abgegeben.

Weiterhin umfasst die Vorrichtung 2 eine an sich bekannte Identifikationseinheit 7, mittels welcher bestimmt werden kann, welcher Fahrzeuginsasse das Bedienelement 9 betätigt.

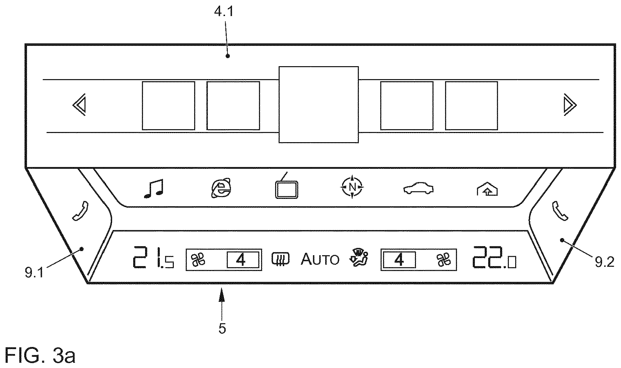

Mit Bezug zu Figur 3a wird eine Anzeige auf dem ersten Teil 4.1 der Anzeigevorrichtung sowie auf der Eingabevorrichtung 5 zu Beginn des erfindungsgemäßen Verfahrens erläutert. Zunächst wird das erfindungsgemäße Verfahren für eine einzige Empfangseinheit 6 erläutert, welche in diesem Fall das Mobiltelefon 6.1 des Fahrers ist. Weiterhin wird auf das linke Bedienelement 9.1 Bezug genommen.

Zunächst koppelt der Fahrer sein Mobiltelefon 6.1 über die Bluetooth-Schnittstelle 8 mit der Vorrichtung 2. Bei dem Koppelvorgang wird das Mobiltelefon 6.1 dem Fahrer zugeordnet. Dies kann über manuelle Eingabe seitens des Fahrers geschehen.

Auf der ersten Anzeigevorrichtung 4.1 wird zunächst eine normale Anzeige der momentan in Anspruch genommenen Fahrzeugfunktion, beispielsweise einer Musikabspielfunktion, angezeigt. Im unteren Teil der ersten Anzeigevorrichtung 4.1, der die Eingabevorrichtung 5 darstellt, wird ein Bedienelement 9.1 angezeigt. Dieses Bedienelement 9.1 kann über Berührungen bedient werden. Hat das Mobiltelefon 6.1 keine Information empfangen, wird das Bedienelement 9.1 im Normalzustand angezeigt. Dies bedeutet, dass im Feld des Bedienelements 9.1 ein Telefonhörer angezeigt wird, der das Mobiltelefon 6.1 repräsentiert. Das Feld des Bedienelements 9.1 ist dabei weiß hinterlegt.

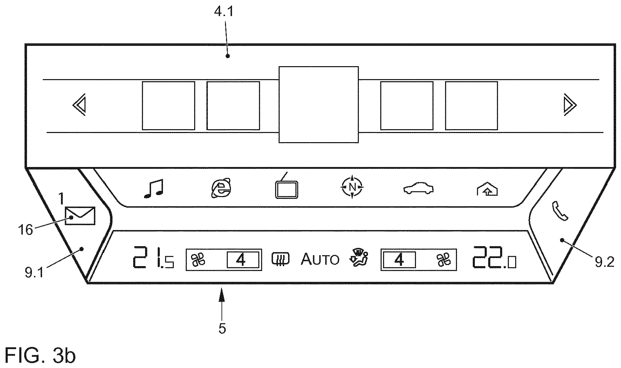

Empfängt das Mobiltelefon 6.1 des Fahrers eine Kurznachricht, eine E-Mail oder eine vergleichbare Nachricht, wird das graphische Bedienelement 9.1 in einer anderen Farbe, beispielsweise schwarz, hinterlegt, wie es in Figur 3b gezeigt ist. Zudem wird in dem Feld des graphischen Bedienelements 9.1, dass im Normalzustand einen Telefonhörer anzeigt, ein graphisches Element 16, das als Briefsymbol ausgestaltet ist, angezeigt. Neben dem Briefsymbol 16 wird die Zahl der empfangenen bzw. nicht gelesenen Nachrichten angezeigt. Zusätzlich kann der Empfang der Nachricht akustisch signalisiert werden.

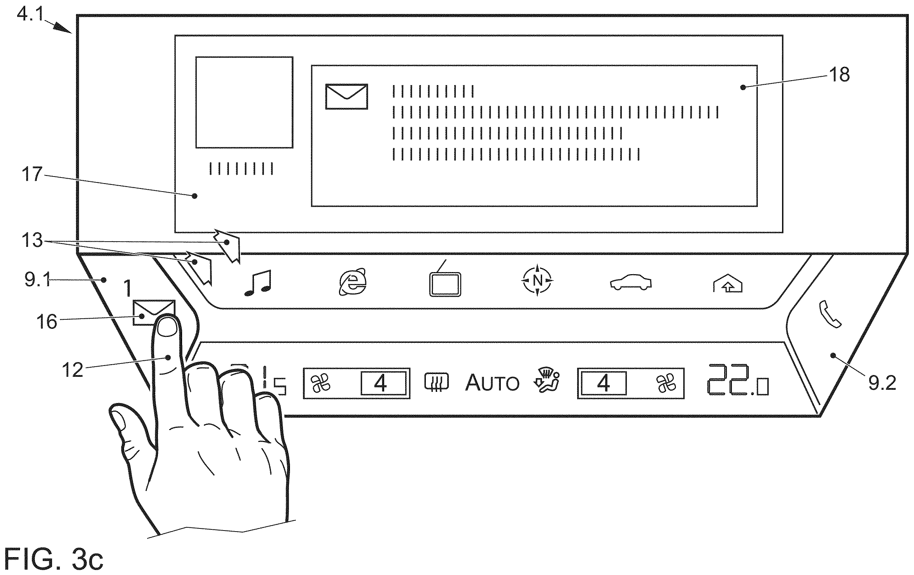

Um den Grad der Vertraulichkeit der Nachricht signalisieren zu können, wird das Briefsymbol 16 in einer von drei Farben angezeigt. Ein grün eingefärbtes Briefsymbol 16 bedeutet dabei "nicht vertraulich", ein orange eingefärbtes Briefsymbol 16 bedeutet "mittelmäßig vertraulich" und ein rot eingefärbtes Briefsymbol 16 bedeutet "streng vertraulich". Dabei kann z.B. bereits der Absender der Nachricht die Vertraulichkeit auswählen. Alternativ kann der Fahrer seinen in seinem Mobiltelefon 6.1 abgespeicherten Kontakten eine Vertraulichkeit zuordnen, so dass alle von dem Kontakt erhaltenen Nachrichten den ausgewählten Vertraulichkeitsgrad zugeteilt bekommen. So kann der Fahrer besser entscheiden, ob er die empfangene Nachricht auf der ersten 4.1 oder auf der zweiten Anzeigevorrichtung 4.2 ausgeben lassen möchte.
Hat der Fahrer nun entschieden, dass er die Nachricht auf der ersten Anzeigevorrichtung 4.1 ausgeben möchte, führt er seine Hand 12 in Richtung der Eingabevorrichtung 5.
Die Identifikationseinheit 7 erfasst eine Bedienabsicht und bestimmt, ob es sich bei der bedienenden Person tatsächlich um die Person handelt, der das Mobiltelefon 6.1 zugeordnet wurde, also den Fahrer. Dies wird insbesondere über ein Verfahren, wie es in der DE 10 2008 019 731 A1 beschrieben ist, bestimmt. Dadurch wird gewährleistet, dass tatsächlich nur der Fahrer bestimmen kann, wo die Nachricht angezeigt wird.
Hat die Identifikationseinheit 7 ermittelt, dass der Fahrer die Bedienabsicht hat, wird das Bedienelement 9.1 zur Bedienung freigegeben. Wird hingegen ermittelt, dass der Beifahrer eine Bedienabsicht für das Bedienelement 9.1 hat, bleibt das Bedienelement inaktiv.
Im vorliegenden Beispiel hat der Fahrer die Bedienabsicht. Das Bedienelement 9.1 kann demnach bedient werden. Der Fahrer führt auf dem Bedienelement 9.1 eine erste Bedienaktion aus. Die erste Bedienaktion ist dabei eine Wischgeste, die der Fahrer mit seiner Hand 12 ausgehend von dem Bedienelement 9.1 zur ersten Anzeigevorrichtung 4.1 hin ausführt. Eine solche Wischgeste ist besonders intuitiv, da sie von dem Briefsymbol 16, der die Nachricht signalisiert, zu der ersten Anzeigevorrichtung 4.1 ausgeführt wird, auf der sie auch ausgegeben werden soll. Dies ist in Figur 3c durch die Pfeile 13 verdeutlicht. Die Information wird durch die Wischgeste auf die erste Anzeigevorrichtung 4.1 gewischt. Dabei kann die Wischgeste direkt durch Berührung der Eingabevorrichtung 5 auf dem Bedienelement 9.1 ausgeführt werden. Alternativ kann die Wischgeste auch bereits in einem bestimmten Abstand vor der Eingabevorrichtung 5 ausgeführt werden.
Hat die Identifikationseinheit 7 ermittelt, dass die Wischgeste von dem Fahrer ausgeführt wurde, wird die Nachricht auf der ersten Anzeigevorrichtung 4.1 angezeigt. Dabei wird in einem ersten Feld 17 angezeigt, von wem die Nachricht stammt und in einem zweiten Feld 18 wird die Nachricht selbst angezeigt.

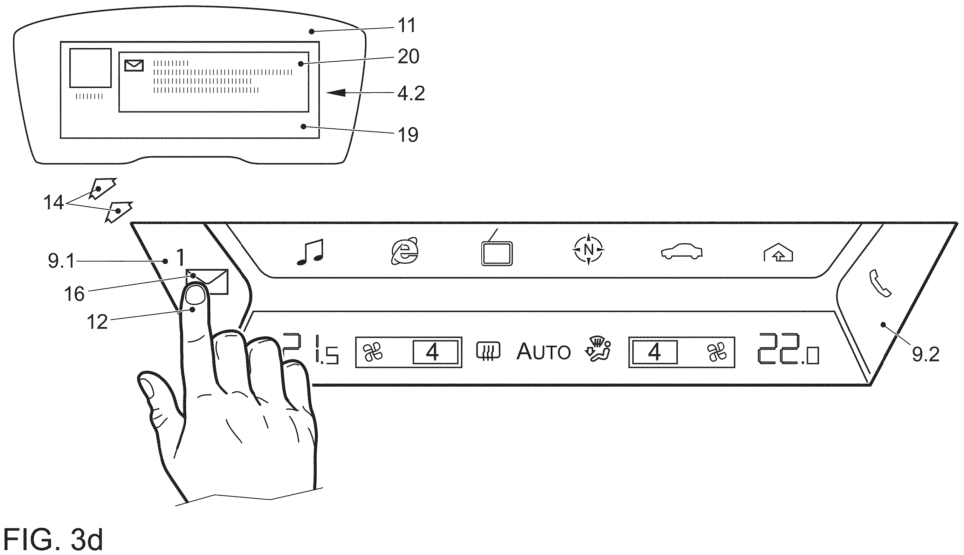

Entscheidet der Fahrer hingegen, dass die Nachricht nur auf der zweiten Anzeigevorrichtung 4.2 angezeigt werden soll, so führt er eine zweite Bedienaktion aus. Die zweite Bedienaktion ist dabei eine Wischgeste, die ausgehend von dem Bedienelement 9.1 seitlich von der ersten Anzeigevorrichtung 4.1 weg in Richtung der zweiten Anzeigevorrichtung 4.2 ausgeführt wird. Dies ist in Figur 3d durch die Pfeile 14 verdeutlicht. Die Nachricht wird nach Identifikation des Fahrers nur auf der zweiten Anzeigevorrichtung 4.2 angezeigt. Auch die zweite Wischgeste ist eine intuitive Geste, da sie von dem Briefsymbol 16, der die Nachricht signalisiert, zu der Anzeigevorrichtung 4.2 hin ausgeführt wird, auf der sie angezeigt werden soll. Dabei wird in einem ersten Feld 19 angezeigt, von wem die Nachricht stammt, und in einem zweiten Feld 20 wird die Nachricht selbst angezeigt.

Alternativ kann die Nachricht nach Ausführung der ersten Bedienaktion auch auf beiden Anzeigevorrichtungen 4.1 und 4.2 gleichzeitig angezeigt werden.

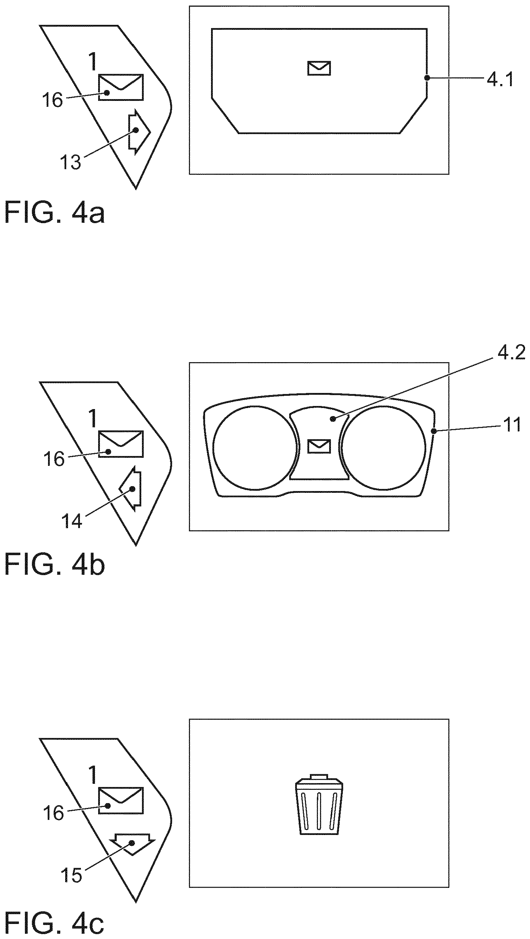

Mit Bezug zu den Figuren 4a und 4c wird ein zweites Ausführungsbeispiel des erfindungsgemäßen Verfahrens erläutert. Diese gleicht prinzipiell dem ersten Ausführungsbeispiel. Figuren 4a und 4b stellen dabei die erste bzw. die zweite Bedienaktion dar.

In Figur 4c ist ein dritte Bedienaktion dargestellt, die ausgeführt werden kann, wenn der Nutzer die empfangene Information weder von der ersten 4.1 noch von der zweiten Ausgabeeinheit 4.2 ausgeben lassen möchte. Die dritte Bedienaktion ist dabei eine Wischgeste, die ausgehend von dem Bedienelement 9.1 nach unten ausgeführt wird. Die Wischrichtung ist dabei durch den Pfeil 15 dargestellt. Durch die dritte Bedienaktion wird ein Signal an die Steuervorrichtung 3 gegeben, die dann die Anzeige auf der Eingabevorrichtung 5 derart ansteuert, dass das Bedienelement 9.1 wieder in seiner Ausgangsform, also dem Telefonhörer ohne farbliche Hinterlegung, angezeigt wird. Die Signalisierung der Nachricht wird dadurch gelöscht. Die Nachricht selbst bleibt jedoch auf dem Mobiltelefon 6.1 erhalten, so dass der Fahrer die Nachricht zu einem von ihm gewählten Zeitpunkt lesen kann.

In einem zweiten Ausführungsbeispiel der Vorrichtung 2 kann eine weitere Empfangseinheit, die insbesondere das Mobiltelefon 6.2 des Beifahrers ist, mit der Steuereinheit 3 über die Schnittstelle 8 gekoppelt werden. Das Mobiltelefon 6.2 des Beifahrers ist dabei in Figur 2 gezeigt.

In einem weiteren Ausführungsbeispiel des erfindungsgemäßen Verfahrens werden zwei Mobiltelefone 6.1 und 6.2 mit dem Fahrzeug 1 gekoppelt. Dies wird wiederum mit Bezug zu den Figuren 3a bis 3d erläutert, die bereits eine zweites Bedienelement 9.2 für das zweite Mobiltelefon 6.2 darstellen.

Während des Koppelvorgangs wird zunächst bestimmt, welches Mobiltelefon welchem Nutzer zugeordnet werden soll. Dies kann beispielsweise über manuelle Eingabe seitens der Nutzer geschehen.

Das Mobiltelefon 6.1 des Fahrers wird dabei als dem Fahrersitz zugehörig und das Mobiltelefon 6.2 des Beifahrers wird als dem Beifahrersitz zugehörig zugeordnet.

Auf der Eingabevorrichtung 5 werden dann zwei graphische Bedienelemente 9.1 und 9.2 erzeugt. Dabei kann das Bedienelement 9.1 nur vom Fahrersitz aus bedient werden, während das Bedienelement 9.2 lediglich vom Beifahrersitz aus bedient werden kann. Dabei wird verhindert, dass der Fahrer Nachrichten vom Mobiltelefon 6.2 des Beifahrers ausgeben lassen kann und umgekehrt.

Prinzipiell erfolgt das Verfahren zur Ausgabe von Nachrichten, die mit dem Mobiltelefon 6.2 des Beifahrers empfangen wurden, auf die gleiche Weise wie das im ersten Ausführungsbeispiel beschriebene Verfahren. Häufig ist dem Beifahrersitz jedoch keine separate Ausgabeeinheit zugeordnet. In diesem Fall wird dem zweiten Bedienelement 9.2 lediglich die erste und dritte Bedienaktion zugeordnet. Der Beifahrer kann demnach eine empfangene Nachricht nur auf der ersten Anzeigevorrichtung 4.1 oder gar nicht ausgeben lassen.

Ist dem Beifahrersitz hingegen eine zusätzliche Anzeigevorrichtung zugeordnet, so sind dem Bedienelement 9.2 die erste, zweite und dritte Bedienaktion zugeordnet. Der Beifahrer kann dann durch Ausführung der zweiten Bedienaktion, also einer Wischgeste von der ersten Anzeigevorrichtung 4.1 in Richtung der zusätzlichen Anzeigevorrichtung die Nachricht nur auf der zusätzlichen Anzeigevorrichtung anzeigen lassen.

Die erfindungsgemäße Vorrichtung 2 kann insbesondere auch dann verwendet werden, wenn die Nachrichten keiner Vertraulichkeit unterliegen. Beispielsweise kann sich der Fahrer eine erhaltene Nachricht nur auf der zweiten Anzeigevorrichtung 4.2 anzeigen lassen, wenn der Beifahrer gerade einen Film auf der ersten Anzeigevorrichtung 4.1 ansieht, der für den Fahrer nicht sichtbar ist. Dadurch muss zum Ausgeben der Nachricht der Film nicht unterbrochen werden.

Die erfindungsgemäße Vorrichtung 2 kann zusätzlich oder ausschließlich auch im hinteren Teil des Fahrzeugs 1 angeordnet sein. Weiterhin können dann auch die Mobiltelefone aller sich im Fahrzeug 1 befindenden Personen mit der Vorrichtung 2 gekoppelt und Nachrichten über das erläuterte Verfahren ausgegeben werden.

Alternativ zu Anzeigevorrichtungen als Ausgabeeinheiten 4.1 und 4.2, können diese auch Lautsprecher sein. Wird die erste Bedienaktion ausgeführt, so wird die Nachricht über Sprachausgabe an den Lautsprechern ausgegeben, die zumindest dem Fahrer- und dem Beifahrersitz zugeordnet sind. Diese entsprechen insbesondere den Lautsprechern, über die auch andere Fahrzeugfunktion, z.B. eine Radiofunktion oder Musikabspielfunktion, ausgegeben werden. Die Ausgabe kann gleichzeitig über Anzeigevorrichtungen und Lautsprecher erfolgen.

Die Ausführung der zweiten Bedienaktion bedingt dann, dass die empfangene Information an einem Lautsprecher ausgegeben wird, der nur einem Fahrersitz zugeordnet ist. Dabei kann es sich insbesondere um einen Lautsprecher handeln, der derart in der Kopfstütze integriert ist, dass die Sprachausgabe nur von der auf dem entsprechenden Fahrersitz sitzenden Person deutlich hörbar ist.

In einem weiteren Ausführungsbeispiel der erfindungsgemäßen Vorrichtung 2 kann die Empfangseinheit 6 ein fest im Fahrzeug verbautes Navigationsgerät sein, dass dem Fahrer Navigationsinformationen zur Verfügung stellt. Möchte der Fahrer nicht, dass der Beifahrer gestört wird, kann sich der Fahrer die Navigationsanzeige über die zweite Bedienaktion in die zweite Anzeigevorrichtung 4.2 wischen. Zusätzlich kann eine Sprachnavigation dann über den in der Kopfstütze des Fahrers eingebrachten Lautsprechers ausgegeben werden.

### Bezugszeichenliste

- 1: Fahrzeug
- 2: Vorrichtung
- 3: Steuervorrichtung
- 4.1: erste Anzeigevorrichtung
- 4.2: zweite Anzeigevorrichtung
- 5: Eingabevorrichtung
- 6: erste Empfangseinheit
- 6.1: Mobiltelefon des Fahrers
- 6.2: Mobiltelefon des Beifahrers
- 7: Identifikationseinheit
- 8: Schnittstelle
- 9: Bedienelement
- 9.1: erstes Bedienelement
- 9.2: zweites Bedienelement
- 10: Mittelkonsole
- 11: Kombiinstrument
- 12: Finger
- 13: Richtung, in die die erste Wischgeste ausgeführt wird
- 14: Richtung, in die die zweite Wischgeste ausgeführt wird
- 15: Richtung, in die die dritte Wischgeste ausgeführt wird
- 16: graphisches Element zur Anzeige einer empfangenen Nachricht
- 17-20: Anzeigefelder

## Patentansprüche

1. Verfahren zum Ausgeben zumindest einer ersten Information in einem Fahrzeug (1), bei dem
einem ersten Bedienelement (9.1) eine erste und eine zweite Bedienaktion zugeordnet ist, die erste Information über eine erste Empfangseinheit (6, 6.1) empfangen wird und der Empfang der ersten Information signalisiert wird, wobei, wenn die erste Bedienaktion erfasst wurde, die empfangene erste Information von einer ersten Ausgabeeinheit (4.1) ausgegeben wird, wobei die erste Ausgabeeinheit (4.1) mehreren Fahrzeugsitzen zugeordnet ist, und,
wenn die zweite Bedienaktion erfasst wurde, die empfangene erste Information von einer zweiten Ausgabeeinheit (4.2) ausgegeben wird, wobei die zweite Ausgabeeinheit (4.2) nur einem Fahrzeugsitz zugeordnet ist, **dadurch gekennzeichnet, dass** der ersten Information ein Vertraulichkeitsgrad zugeordnet wird und der Vertraulichkeitsgrad ausgegeben wird.

2. Verfahren nach Anspruch 1,
**dadurch gekennzeichnet, dass**
das erste Bedienelement (9) von einer Eingabevorrichtung (5) mit einer Anzeigefläche angezeigt wird, wobei das erste Bedienelement (9) am Rand der Anzeigefläche angeordnet ist, und
die erste und zweite Bedienaktion Wischgesten sind, wobei die erste Bedienaktion eine Wischgeste ist, die ausgehend von dem ersten Bedienelement (9) zur ersten Ausgabeeinheit (4.1) hin ausgeführt wird, und die zweite Bedienaktion eine Wischgeste ist, die ausgehend von dem ersten Bedienelement (9) seitlich von der ersten Ausgabeeinheit (4.1) weg zu der zweiten Ausgabeeinheit (4.2) hin ausgeführt wird.

3. Verfahren nach Anspruch 1 oder 2,
**dadurch gekennzeichnet, dass**
dem Bedienelement (9) eine dritte Bedienaktion zugeordnet ist, wobei, wenn die dritte Bedienaktion ausgeführt wurde, die empfangene Information nicht ausgegeben wird.

4. Verfahren nach Anspruch 3,
**dadurch gekennzeichnet, dass**
die dritte Bedienaktion eine Wischgeste ist, die ausgehend von dem Bedienelement (9) nach unten ausgeführt wird.

5. Verfahren nach einem der vorhergehenden Ansprüche,
**dadurch gekennzeichnet, dass**
die erste Empfangseinheit (6, 6.1) einem ersten Nutzer zugeordnet wird, und
die erste Information nur dann ausgegeben wird, wenn ermittelt wurde, dass der erste Nutzer die erste oder zweite Bedienaktion tätigt.

6. Verfahren nach einem der vorhergehenden Ansprüche,
**dadurch gekennzeichnet, dass**
über eine zweite Empfangseinheit (6.2) eine zweite Information empfangen wird, wobei die zweite Empfangseinheit (6.2) einem zweiten Nutzer zugeordnet wird,
einem zweiten Bedienelement (9.2) die erste, die zweite und/oder die dritte Bedienaktion zugeordnet wird und
die zweite Information nur dann ausgegeben wird, wenn ermittelt wurde, dass der zweite Nutzer die erste oder zweite Bedienaktion tätigt.

7. Verfahren nach einem der vorhergehenden Ansprüche,
**dadurch gekennzeichnet, dass**
die erste (6, 6.1) und/oder eine zweite Empfangseinheit (6.2) ein mobiles Gerät (6.1, 6.2) ist/sind, welches/welche mit dem Fahrzeug (1) gekoppelt wird/werden.

8. Vorrichtung (2) zum Ausgeben zumindest einer Information in einem Fahrzeug (1) mit
einer ersten Empfangseinheit (6, 6.1), über die eine erste Information empfangbar ist,
einer Signalvorrichtung, mittels welcher der Empfang der Information signalisierbar ist,
einem ersten Bedienelement (9), welchem eine erste und eine zweite Bedienaktion zugeordnet sind,
einer Eingabevorrichtung (5), auf welcher die erste und die zweite Bedienaktion eingebbar und erfassbar sind, wobei die erste Information von der ersten Ausgabeeinheit (4.1) ausgebbar ist, wenn die erste Bedienaktion erfasst wurde, wobei die erste Ausgabeeinheit (4.1) mehreren Fahrzeugsitzen zugeordnet ist, und eine zweite Ausgabeeinheit (4.2) derart ansteuerbar ist, dass die erste Information von der zweiten Ausgabeeinheit (4.2) ausgebbar ist, wenn die zweite Bedienaktion erfasst wurde, wobei die zweite Ausgabeeinheit (4.2) nur einem Fahrzeugsitz zugeordnet ist, **dadurch gekennzeichnet, dass** der ersten Information ein Vertraulichkeitsgrad zugeordnenbar ist und mittels einer Steuervorrichtung (3) eine erste Ausgabeeinheit (4.1) derart ansteuerbar ist, dass der Vertraulichkeitsgrad ausgebbar ist.

9. Vorrichtung (2) nach Anspruch 8,
**dadurch gekennzeichnet, dass**
die erste Empfangseinheit (6, 6.1) ein mobiles Gerät (6.1) ist, welches über eine Schnittstelle (8) mit der Vorrichtung (2) koppelbar ist.

10. Vorrichtung (2) nach einem der Ansprüche 8 oder 9,
**dadurch gekennzeichnet, dass**
die erste Ausgabeeinheit eine erste Anzeigevorrichtung (4.1) in der Mittelkonsole (10) des Fahrzeugs (1) umfasst und die zweite Ausgabeeinheit eine zweite Anzeigevorrichtung (4.2) im Kombiinstrument (11) des Fahrzeugs (1) umfasst.

11. Vorrichtung (2) nach einem der Ansprüche 8 bis 10,
**dadurch gekennzeichnet, dass**
die erste Ausgabeeinheit ein Lautsprechersystem für eine Sprachausgabe umfasst, bei dem die Lautsprecher im Innenraum des Fahrzeugs (1) verteilt angeordnet sind, und die zweite Ausgabeeinheit ein Lautsprechersystem in der Kopfstütze des entsprechenden Fahrzeugsitzes umfasst.

12. Vorrichtung (2) nach einem der Ansprüche 8 bis 11,
**dadurch gekennzeichnet, dass**
die Vorrichtung (2) eine Identifikationseinheit (7) umfasst, mittels welcher ermittelbar ist, welcher Nutzer die Bedienaktionen tätigt.

13. Fahrzeug (1) mit einer Vorrichtung (2) nach einem der Ansprüche 8 bis 12.

## Claims

1. Method for outputting at least one first item of information in a vehicle (1), in which a first operating action and a second operating action are assigned to a first operating element (9.1), the first item of information is received via a first receiving unit (6, 6.1) and the reception of the first item of information is signalled,
wherein, if the first operating action has been detected, the received first item of information is output by a first output unit (4.1), wherein the first output unit (4.1) is assigned to a plurality of vehicle seats, and,
if the second operating action has been detected, the received first item of information is output by a second output unit (4.2), wherein the second output unit (4.2) is assigned to only one vehicle seat, **characterized in that** a degree of confidentiality is assigned to the first item of information and the degree of confidentiality is output.

2. Method according to Claim 1,
**characterized in that**
the first operating element (9) is displayed by an input apparatus (5) having a display surface, wherein the first operating element (9) is arranged at the edge of the display surface, and the first and second operating actions are swiping gestures, wherein the first operating action is a swiping gesture which is carried out from the first operating element (9) towards the first output unit (4.1), and the second operating action is a swiping gesture which is carried out from the first operating element (9), laterally away from the first output unit (4.1), towards the second output unit (4.2).

3. Method according to Claim 1 or 2,
**characterized in that**
a third operating action is assigned to the operating element (9), wherein the received information is not output if the third operating action has been carried out.

4. Method according to Claim 3,
**characterized in that**
the third operating action is a swiping gesture which is carried out from the operating element (9) downwards.

5. Method according to one of the preceding claims,
**characterized in that**
the first receiving unit (6, 6.1) is assigned to a first user, and
the first item of information is output only when it has been determined that the first user is effecting the first or second operating action.

6. Method according to one of the preceding claims,
**characterized in that**
a second item of information is received via a second receiving unit (6.2), wherein the second receiving unit (6.2) is assigned to a second user, the first, second and/or third operating action is/are assigned to a second operating element (9.2), and
the second item of information is output only when it has been determined that the second user is effecting the first or second operating action.

7. Method according to one of the preceding claims,
**characterized in that**
the first receiving unit (6, 6.1) and/or a second receiving unit (6.2) is/are a mobile device (6.1, 6.2) coupled to the vehicle (1).

8. Apparatus (2) for outputting at least one item of information in a vehicle (1), having
a first receiving unit (6, 6.1) which can be used to receive a first item of information,
a signalling apparatus which can be used to signal the reception of the information,
a first operating element (9) which is assigned a first operating action and a second operating action,
an input apparatus (5) on which the first and second operating actions can be input and detected, wherein
the first item of information can be output by the first output unit (4.1) if the first operating action has been detected, wherein the first output unit (4.1) is assigned to a plurality of vehicle seats, and a second output unit (4.2) can be controlled in such a manner that the first item of information can be output by the second output unit (4.2) if the second operating action has been detected, wherein the second output unit (4.2) is assigned to only one vehicle seat, **characterized in that** a degree of confidentiality can be assigned to the first item of information and a first output unit (4.1) can be controlled by means of a control apparatus (3) in such a manner that the degree of confidentiality can be output.

9. Apparatus (2) according to Claim 8,
**characterized in that**
the first receiving unit (6, 6.1) is a mobile device (6.1) which can be coupled to the apparatus (2) via an interface (8).

10. Apparatus (2) according to either of Claims 8 and 9,
**characterized in that**
the first output unit comprises a first display apparatus (4.1) in the centre console (10) of the vehicle (1), and the second output unit comprises a second display apparatus (4.2) in the combination instrument (11) of the vehicle (1).

11. Apparatus (2) according to one of Claims 8 to 10,
**characterized in that**
the first output unit comprises a loudspeaker system for a voice output, in which the loudspeakers are arranged in a distributed manner in the interior of the vehicle (1), and the second output unit comprises a loudspeaker system in the headrest of the corresponding vehicle seat.

12. Apparatus (2) according to one of Claims 8 to 11,
**characterized in that**
the apparatus (2) comprises an identification unit (7) which can be used to determine which user is effecting the operating actions.

13. Vehicle (1) having an apparatus (2) according to one of Claims 8 to 12.

## Revendications

1. Procédé d'émission d'au moins une première information dans un véhicule (1), dans lequel
des première et deuxième actions de commande sont associées à un premier élément de commande (9.1), la première information est reçue par une première unité de réception (6, 6.1), et
la réception de la première information est signalisée, dans lequel,
lorsque la première action de commande a été détectée, la première information reçue est émise par une première unité d'émission (4.1), dans lequel la première unité d'émission (4.1) est associée à plusieurs sièges de véhicule, et,
lorsque la deuxième action de commande a été détectée, la première information reçue est émise par une deuxième unité d'émission (4.2), dans lequel la deuxième unité d'émission (4.2) n'est associée qu'à un seul siège de véhicule, **caractérisé en ce qu'**un niveau de confidentialité est associé à la première information et **en ce que** le niveau de confidentialité est émis.

2. Procédé selon la revendication 1,
**caractérisé en ce que**
le premier élément de commande (9) est affiché par un dispositif de saisie (5) comportant une surface d'affichage, dans lequel le premier élément de commande (9) est disposé sur le bord de la surface d'affichage, et
les première et deuxième actions de commande sont des gestes d'essuyage, dans lequel la première action de commande est un geste d'essuyage qui est effectué depuis le premier élément de commande (9) vers la première unité d'émission (4.1), et la deuxième action de commande est un geste d'essuyage qui est effectué en s'écartant latéralement du premier élément de commande (9) depuis la première unité d'émission (4.1) vers la deuxième unité d'émission (4.2).

3. Procédé selon la revendication 1 ou 2,
**caractérisé en ce qu'**une troisième action de commande est associée à l'élément de commande (9), dans lequel l'information reçue n'est pas émise lorsque la troisième action de commande a été effectuée.

4. Procédé selon la revendication 3,
**caractérisé en ce que** la troisième action de commande est un geste d'essuyage effectué vers le bas depuis l'élément de commande (9).

5. Procédé selon l'une des revendications précédentes, **caractérisé en ce que**
la première unité de réception (6, 6.1) est associée à un premier utilisateur, et
la première information n'est émise que s'il a été déterminé que le premier utilisateur exécute la première ou la deuxième action de commande.

6. Procédé selon l'une des revendications précédentes,
**caractérisé en ce que**
une deuxième information est reçue par l'intermédiaire d'une deuxième unité de réception (6.2), dans lequel la deuxième unité de réception (6.2) est associée à un deuxième utilisateur,
les première, deuxième et/ou troisième actions de commande sont associées à un deuxième élément de commande (9.2), et
la deuxième information n'est émise que s'il a été déterminé que le deuxième utilisateur exécute la première ou la deuxième action de commande.

7. Procédé selon l'une des revendications précédentes,
**caractérisé en ce que**
la première (6, 6.1) et/ou une deuxième unité de réception (6.2) est/sont un dispositif mobile (6.1, 6.2) qui est/sont couplé(s) au véhicule (1).

8. dispositif (2) d'émission d'au moins une information dans un véhicule (1), comportant
une première unité de réception (6, 6.1) par l'intermédiaire de laquelle une première information peut être reçue,
un dispositif de signalisation au moyen duquel la réception de l'information peut être signalisée,
un premier élément de commande (9), auquel des première et deuxième actions de commande sont associées, un dispositif de saisie (5), sur lequel les première et deuxième actions de commande peuvent être saisies et détectées,
dans lequel
la première information peut être émise par la première unité d'émission (4.1) lorsque la première action de commande a été détectée, dans lequel la première unité d'émission (4.1) est associée à plusieurs sièges de véhicule, et une deuxième unité d'émission (4.2) peut être commandée de telle sorte que la première information peut être émise par la deuxième unité d'émission (4.2) lorsque la deuxième action de commande a été détectée, dans lequel la deuxième unité d'émission (4.2) n'est associée qu'à un siège de véhicule,
**caractérisé en ce qu'**un niveau de confidentialité peut être associé à la première information et **en ce qu'**une première unité d'émission (4.1) peut être commandée au moyen d'un dispositif de commande (3) de telle sorte que le niveau de confidentialité peut être émis.

9. Dispositif (2) selon la revendication 8,
**caractérisé en ce que**
la première unité de réception (6, 6.1) est un dispositif mobile (6.1) qui peut être couplé au dispositif (2) par l'intermédiaire d'une interface (8).

10. Dispositif (2) selon l'une des revendications 8 ou 9,
**caractérisé en ce que**
la première unité d'émission comprend un premier dispositif d'affichage (4.1) dans la console centrale (10) du véhicule (1) et **en ce que** la deuxième unité d'émission comprend un deuxième dispositif d'affichage (4.2) dans le combiné d'instruments (11) du véhicule (1) .

11. Dispositif (2) selon l'une des revendications 8 à 10,
**caractérisé en ce que**
la première unité d'émission comprend un système de haut-parleurs pour une émission vocale, dans lequel les haut-parleurs sont répartis dans l'espace intérieur du véhicule (1), et la deuxième unité d'émission comprend un système de haut-parleurs dans l'appui-tête du siège de véhicule correspondant.

12. Dispositif (2) selon l'une des revendications 8 à 11,
**caractérisé en ce que** le dispositif (2) comprend une unité d'identification (7) au moyen de laquelle il est possible de déterminer quel utilisateur effectue les actions de commande.

13. Véhicule (1) comportant un dispositif (2) selon l'une des revendications 8 à 12.
